# EUROPEAN PATENT APPLICATION

(11) **EP 2 410 415 A1**
(43) Date of publication of application: **25.01.2012**
(21) Application number: 11150243.1
(22) Date of filing: 05.01.2011
(51) Int. Cl.: G06F 3/048, G06F 3/041

(54) **Display apparatus and control method thereof**

(30) Priority: 19.07.2010 KR 20100069670
(71) Applicant: Samsung Electronics Co., Ltd., Suwon-si, Gyeonggi-do (KR)
(72) Inventor: Choi Eun-seok, Gyeonggi-do (KR); Soh Byung-seok, Gyeonggi-do (KR); Choi Sang-on, Gyeonggi-do (KR); Yu, Mi-ra, Seoul (KR); Yoo Ho-june, Seoul (KR)
(74) Representative: Hewett, Jonathan Michael Richard

(57) **Abstract**

A display apparatus according to the present disclosure includes: a user input unit which includes at least one touch sense pad and at least one switch; and a controller which determines that the switch is clicked if difference between first position information of a first position on the touch sense pad where a switch press is generated and second position information of a second position on the touch sense pad where a switch release is generated is within a preset range.

## Description

The present invention relates to a display apparatus including a user input unit having a switch and a control method thereof.

In general, a remote controller for controlling a television includes numeral and arrow buttons. A user performs control of moving a pointer or selecting a channel by pressing one of the numeral or arrow buttons.

Devices based on a touch sensor such as a touch pad or a touch screen enable a user to more easily and quickly move the pointer or control a graphic user interface (GUI) through his/her finger or a pointing device. Such a touch-based device is advantageous to maximize a user's experience in light of more intuitively controlling the GUI.

Accordingly, one or more exemplary embodiments provide a display apparatus which can correctly recognize a click of a switch and a control method thereof.

One or more exemplary embodiments also provide a display apparatus and a control method which can prevent a switch from being clicked by a user's mistake.

One or more exemplary embodiments also provide a display apparatus and a control method which enable a user to easily input a text through a touch pad.

According to an aspect of the present invention, there is provided a display apparatus including: a user input unit which includes at least one touch sense pad and at least one switch; and a controller which determines that the switch is clicked if difference between first position information of a first position on the touch sense pad where a switch press is generated and second position information of a second position on the touch sense pad where a switch release is generated is within a preset range.

The controller may determine that the touch sense pad is clicked at the first position where the switch press is generated.

If the first position information is (X, Y), the second position information is (X', Y'), |X-X'| is equal to or less than a preset first critical value, and |Y-Y'| is equal to or less than a preset second critical value, the controller may determine that the touch sense pad is clicked at the first position where the switch press is generated.

If the first position information is (X, Y), the second position information is (X', Y'), and |X-X'| exceeds a preset critical value, the controller may determine that the switch is not clicked.

If the first position information is (X, Y), the second position information is (X', Y'), and |Y-Y'| exceeds a preset critical value, the controller may determine that the switch is not clicked.

If the first position information is (X, Y), the second position information is (X', Y'), and (X-X')²+(Y-Y')² exceeds a preset critical value, the controller may determine that the switch press is not clicked.

If it is determined that the switch is not clicked, the controller may determine that a touch move is generated from the first position where the switch press is generated to the second position where the switch release is generated.

The switch may be disposed under the touch sense pad.

There may be not more than one switch.

The display apparatus may further include a display unit; and a user interface (UI) generator which generates UI information to be displayed on the display unit, wherein the touch sense pad includes a plurality of areas, and wherein the controller controls the UI generator so that a letter, corresponding to position information of an area of the plurality of areas, in which the click is generated, can be displayed on the display unit based on the position information.

The touch sense pad may include a plurality of key-shaped pads and recessed boundaries between the key-shaped pads.

The key-shaped pads may be printed with at least one of a QWERTY key pattern and a numeral key pattern.

The touch sense pad may include two parts separated from each other.

Boundaries between the plurality of areas may be visually marked on the touch sense pad.

The touch sense pad may be marked with at least one of a QWERTY key pattern and a numeral key pattern.

The user input unit and the controller may communicate with each other remotely.

According to another aspect of the present invention, there is provided a method of controlling a display apparatus including a user input unit which includes at least one touch sense pad and at least one switch for clicking the touch sense pad, the method including: sensing a first position on the touch sense pad where a switch press is generated; sensing a second position on the touch sense pad where a switch release is generated; determining whether a difference between first position information of the first position and second position information of the second position is within a preset range; and determining whether the switch is clicked based on whether the difference between the first position and the second position is within the preset range.

The above and/or other aspects will become apparent and more readily appreciated from the following description of exemplary embodiments, taken in conjunction with the accompanying drawings, in which:
FIG. 1 is a schematic view of a display apparatus according to an exemplary embodiment;
FIG. 2 is a control block diagram of a display apparatus according to an exemplary embodiment;
FIG. 3 is a sectional view taken in I-I of FIG. 1;
FIG. 4 shows position information of a switch press according to an exemplary embodiment;
FIG. 5 shows position information of a switch release according to an exemplary embodiment;
FIG. 6 is a control flowchart for explaining a method of eliminating an error of a switch click according to an exemplary embodiment;
FIG. 7 is a control flowchart for explaining a method of eliminating an error of a switch click according to another exemplary embodiment;
FIG. 8 shows a touch sense pad included in a user input unit according to another exemplary embodiment;
FIG. 9 shows a touch sense pad included in a user input unit according to another exemplary embodiment;
FIG. 10 shows a touch sense pad included in a user input unit according to another exemplary embodiment; and
FIG. 11 shows a schematic view of a display apparatus according to another exemplary embodiment.

Below, exemplary embodiments of the present invention will be described in detail with reference to accompanying drawings so as to be easily realized by a person having ordinary knowledge in the art. The exemplary embodiments may be embodied in various forms without being limited to the exemplary embodiments set forth herein.

Descriptions of well-known parts are omitted for clarity, and like reference numerals refer to like elements throughout.

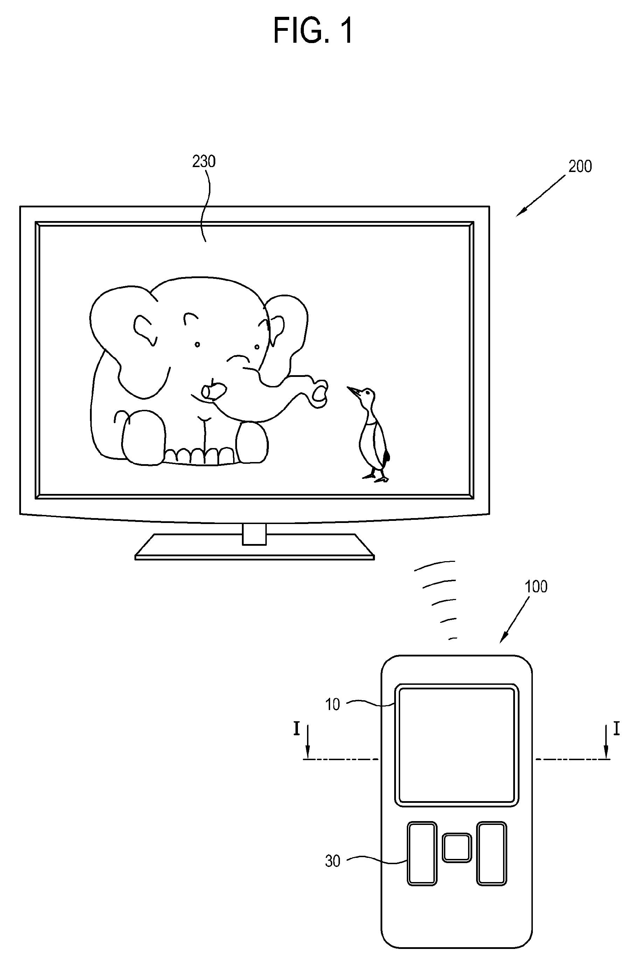

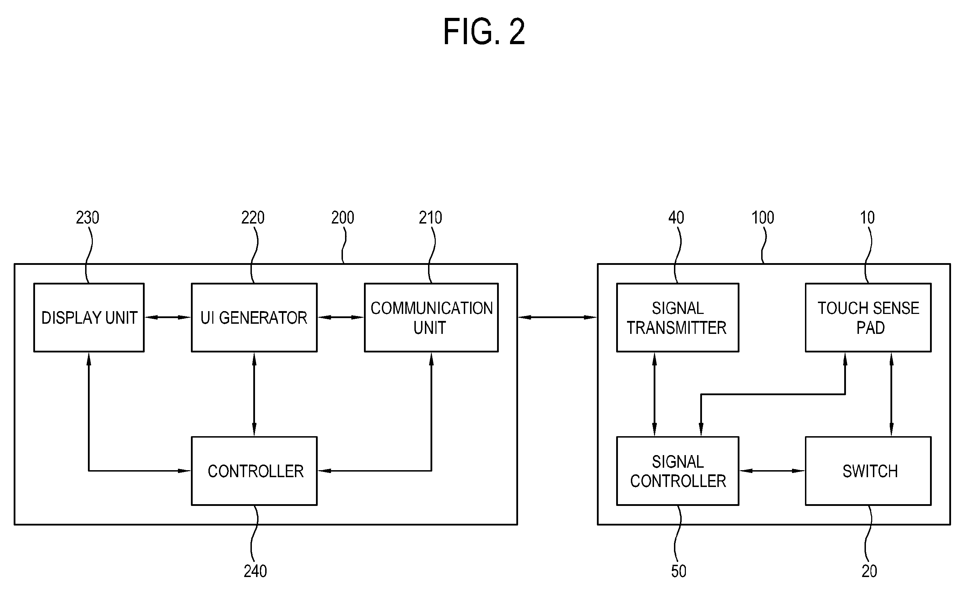

FIG. 1 is a schematic view of a display apparatus according to an exemplary embodiment, and FIG. 2 is a control block diagram of a display apparatus according to an exemplary embodiment. As shown therein, the display apparatus includes a main body 200 including a display unit 230, and a user input unit 100 controlling the main body 200.

The user input unit 100 may be a remote controller capable of controlling various audio/video devices such as a television, but is not limited thereto. Alternatively, the user input unit 100 may be a dual television that has recently been actively developed. For example, an auxiliary television including a display unit and a touch pad may be used as the user input unit 100 in order to control a main television.

Further, a mobile phone having a remote control function may be used as the user input unit as long as it includes a touch pad. A user input device according to this exemplary embodiment may have a simple structure that includes a small number of, e.g., 2 to 4, buttons 30 instead of many buttons such as the existing numeral buttons and functional buttons, and a touch sense pad 10.

The main body 200 includes a communication unit 210 for communicating with the user input unit 100, the display unit 230, a user interface (UI) generator 220, and a controller 240 for controlling the communication unit 210, the UI generator 220, and the display unit 230. The user input unit 100 includes the touch sense pad 10, a switch 20, one or more buttons 30, a signal transmitter 40 and a signal controller 50.

The communication unit 210 remotely receives a signal from the user input unit 100 and outputs it to the controller 240. The communication unit 210 may be a communication module capable of receiving an infrared (IR) signal.

The UI generator 220 generates a variety of UI information to be provided to a user and displays it on the display unit 230.

The display unit 230 may include a liquid crystal display (LCD) panel having a liquid crystal layer, an organic light emitting display (OLED) panel having an organic light emitting layer, a plasma display panel (PDP), or another display as would be understood by one of skill in the art, and a panel driver (not shown) to drive the above panel. The display unit 230 may display a broadcast signal, a still image such as a picture, and various moving pictures, and displays the UI information provided by the UI generator 220. Also, the display unit 230 may display an electronic program guide (EPG), contents provided by a content provider, and applications in the form of icons.

The touch sense pad 10 includes a pad capable of sensing a touch of a part of a user's body or a touch of pointing device. The touch sense pad 10 may be a touch screen on which graphics are displayed. The touch sense pad 10 is provided at a place on the user input unit 100 where a user can easily touch it while holding the user input unit in his/her one hand, and one or more touch sense pads 10 may be provided. On the touch sense pad 10, a user may perform various operations such as a touch move, a tap corresponding to a light touch, a click corresponding to a touch stronger than the tap, a double-click, a drag-and-drop, flicking, scrolling, etc.

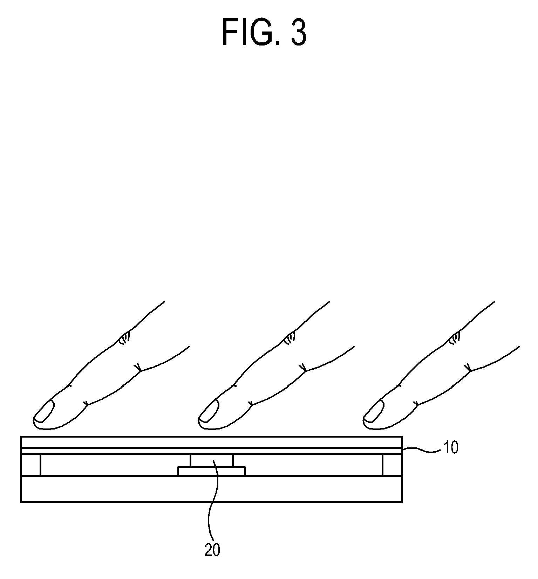

FIG. 3 is a sectional view taken along line I-I of FIG. 1. As shown therein, the switch 20 is placed under the touch sense pad 10, and serves as a button which may be actuated so as to enable a user to click the touch sense pad 10. A user may select a selective item through the click based on a touching operation. The switch 20 is not spaced apart from the touch sense pad 10 but may be positioned to contact the touch sense pad 10, so that a user can more easily click the switch 20. In this exemplary embodiment, one switch 20 exists under the touch sense pad 10. Thus, a part of a user's body or the pointing device can click the touch sense pad 10 at any part of the touch sense pad 10.

The signal transmitter 40 outputs information about the touch move, information about the click of the switch 20, and information about the input of the button 30 to the communication unit 210 under control of the signal controller 50. The signal transmitter 40 of the user input unit 100 may include a communication module capable of interactively communicating with the communication unit 210. In this case, control signals can be interactively transmitted and received between the communication unit 210 and the signal transmitter 40.

The signal controller 50 controls the signal transmitter 40 to output the information about the touch move to the communication unit 210 when the touch move occurs on the touch sense pad 10, and output the information about a position on the touch sense pad 10 where the click of the switch 20 is generated. The click of the switch 20 can be divided into a switch press in which a user presses the touch sense pad 10 and a switch release in which a user releases the press.

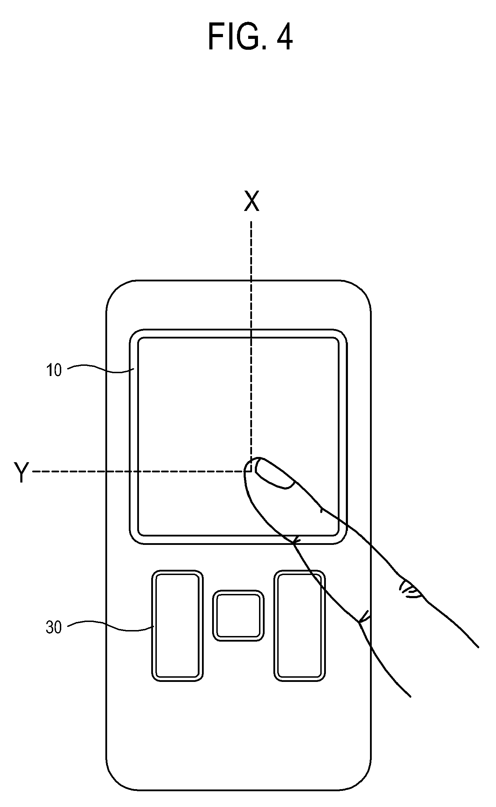

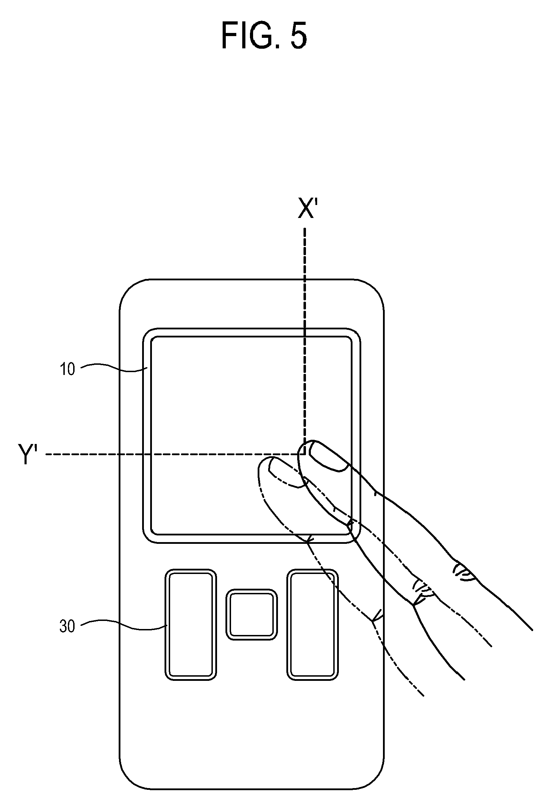

The controller 240 determines that the switch 20 is clicked if a difference between first position information on the touch sense pad 10 where the switch press occurs and second position information on the touch sense pad 10 where the switch release occurs is within a preset range. FIG. 4 shows the position information of the switch press when a user presses the switch 20, and FIG. 5 shows the position information of the switch release when a user releases the touch. If a user presses the switch 20 at any part on the touch sense pad 10, the position of the switch press is obtained as the first position information (X, Y) as shown in FIG. 4. The first position information (X, Y) is transmitted to the controller 240 through the signal transmitter 40. After the switch press, if a user takes his/her hand off the touch sense pad 10 or the pointing device is separated from the touch sense pad 10, the second position information (X', Y') is transmitted to the controller 240 as shown in FIG. 5. The controller 240 determines that the switch 20 is clicked at the first position information (X, Y) only if the first position information (X, Y) and the second position information (X', Y') exist within the preset range.

When the switch 20 is clicked in this exemplary embodiment, such an operation acts as a kind of input for controlling an image displayed on the display unit 230. Usually, a switch click is achieved by a user's operation of pressing and releasing a contact surface of the touch sense pad 10 for a very short time. Also, a user may perform the flicking, the scrolling, or the drag and drop on the touch sense pad 10. Such operations involve movement of a finger or the pointing device between the switch press until the touch sense pad 10 is released from the touched state. Since the user input unit 100 in this exemplary embodiment includes the switch 20 under the touch sense pad 10, the switch 20 may be pressed (i.e., clicked) when the flicking, the scrolling or the drag and drop is performed. That is, a user intends to perform the flicking, the scrolling or the drag and drop on the touch sense pad 10, but the switch 20 may be clicked to thereby generate an unintended input. To solve this problem, the controller 240 discriminates between the click, the flicking, etc., among the user's operations, and processes only an intended click as the click of the switch 20. If a user intends to make the switch click, the positions where the switch press and the switch release occur may have no change or may be changed within a very narrow range. Thus, the controller 240 performs control corresponding to the click depending on variation in the position information between the switch press and the switch release.

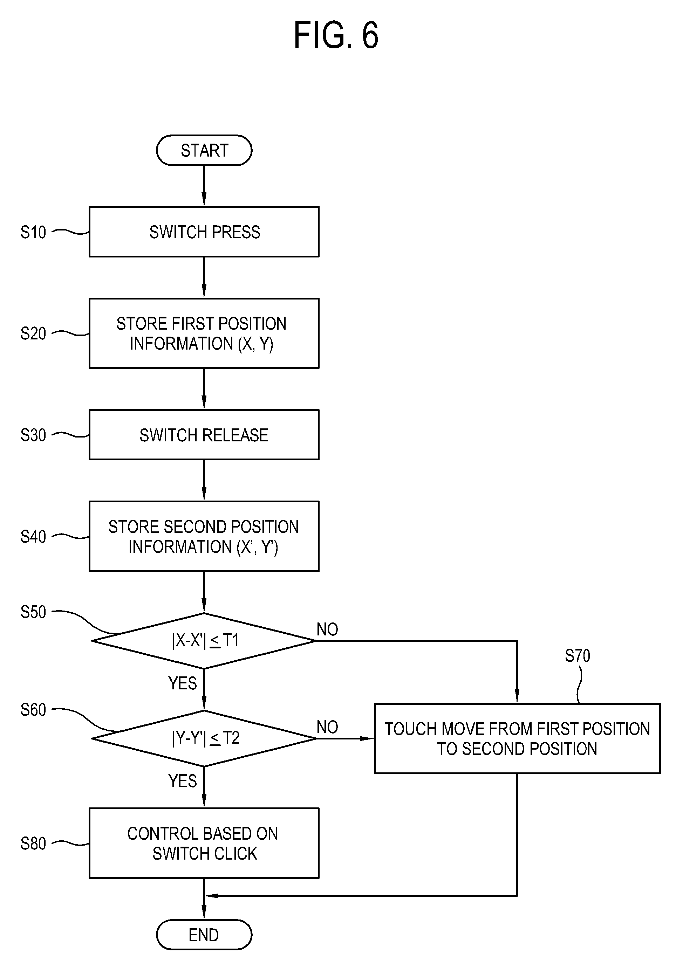

FIG. 6 is a control flowchart for explaining a method of eliminating an error of a switch click according to an exemplary embodiment.

First, when a user makes the switch press (S10), the signal controller 50 determines the first position information (X, Y), where the switch press is generated, and transmits it to the controller 240.

The controller 240 stores the received first coordinate position information (X, Y) (S20), where X and Y are coordinates of a location at which the switch is pressed After the switch press, if the switch release is generated (S30), the signal controller 50 determines the second coordinate position information (X', Y') of the switch release, and the second position information (X', Y') is stored by the controller 240 (S40), where X' and Y' are coordinates of a location at which the switch release is generated.

The controller 240 determines whether an X-coordinate deviation (|X-X'|) between the first position information (X, Y) and the second position information (X', Y') exceeds a first critical value T1 (S50).

If it is determined that the X-coordinate deviation (|X-X'|) exceeds the first critical value T1, the controller 240 determines that not a switch click but rather a touch move from a first position corresponding to the first position information (X, Y) to a second position corresponding to the second position information (X', Y') is generated (S70). That is, if a predetermined condition is not satisfied, the controller 240 determines that just a point moves.

On the other hand, if it is determined that the X-coordinate deviation (|X-X'|) is equal to or less than the first critical value T1, the controller 240 determines whether a Y-coordinate deviation (|Y-Y'|) between the first position information (X, Y) and the second position information (X', Y') exceeds a second critical value T2 (S60).

Similar to the above determination, if the Y-coordinate deviation (|Y-Y'|) exceeds the second critical value T2, the controller 240 determines that the switch 20 is not clicked.

If it is determined that the Y-coordinate deviation (|Y-Y'|) is equal to or less than the second critical value T2, the controller 240 determines that the switch click intended by a user is generated, and performs control based on the switch click (S80). The control based on the switch click may include controlling power of the main body 200, selecting a channel, controlling a volume, controlling a UI image, and so on.

Alternatively, the controller 240 may use a time difference between the switch press and the switch release as a reference for determining whether the switch is clicked. For example, if the time difference between the switch press and the switch release is within a preset range, this time condition may be regarded as the switch click. Further, if both the time condition and the above position difference condition are satisfied, it may be the switch click.

Alternatively, not the controller 240 but the signal controller 50 may determine an error of the switch click and transmit it to the controller 240. In this case, the controller 240 does not receive the first position information (X, Y) and the second position information (X', Y') but receives information that the switch click is generated, thereby performing the control based on the switch click.

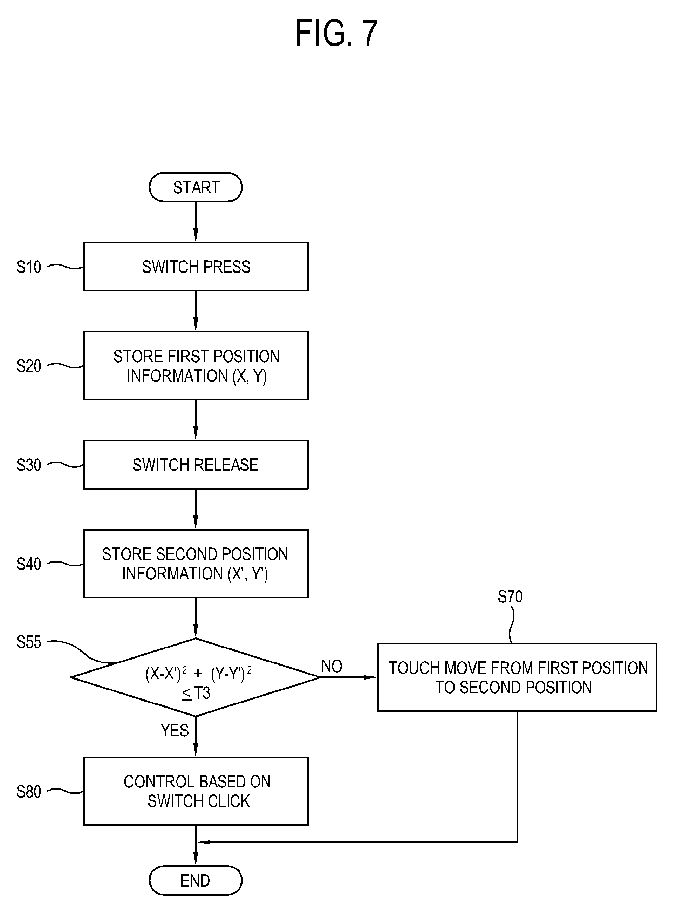

FIG. 7 is a control flowchart for explaining a method of eliminating an error of a switch click according to another exemplary embodiment. As shown therein, the control method in this embodiment is the same as the control method of FIG. 6 with respect to the operations (S10-S40) of storing the first position information (X, Y) and the second position information (X', Y').

The controller 240 that receives the first position information (X, Y) and the second position information (X', Y') determines whether (X-X')²+(Y-Y')² is equal to or less than a third critical value T3 (S55). The controller may use various mathematical algorithms for determining the deviation between the first position information (X, Y) and the second position information (X', Y'), and a method for obtaining the deviation is not limited to those described in FIGs. 6 and 7.

If it is determined that (X-X')²+(Y-Y')² is equal to or less than the third critical value T3, the controller 240 determines that the switch 20 is clicked, thereby performing control based on the switch click (S80). Otherwise, the controller 240 determines that the touch move from a first position corresponding to the first position information (X, Y) to a second position corresponding to the second position information (X', Y') is generated (S70).

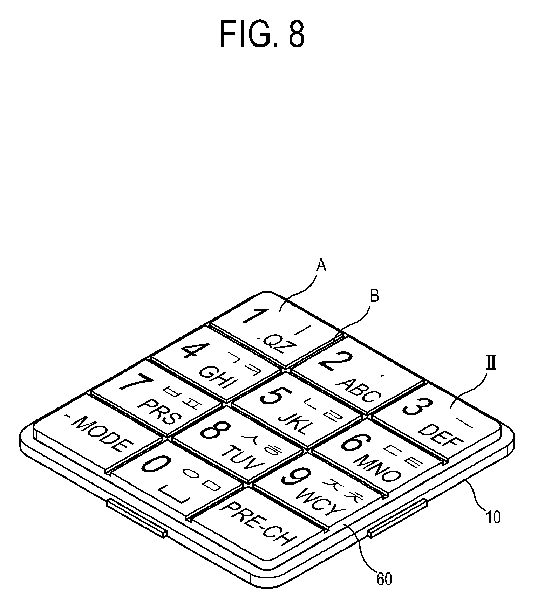

FIG. 8 shows a touch sense pad included in a user input unit according to another exemplary embodiment.

As shown therein, the touch sense pad 10 in this exemplary embodiment is divided into a plurality of areas A. On the touch sense pad 10, a boundary B of an area A is recessed to form a key-shaped pad 60. The key-shaped pad 60 is thin enough to sense a touch on the touch sense pad 10, and is in contact with the touch sense pad 10. The key-shaped pad 60 is a pad where the area A and the boundary B are integrated as a single body. A user can more easily feel the boundary B of the area A by touching the key-shaped pad 60, and the switch click allows a user to experience as if s/he presses a key pad. Due to the recessed boundary B, a user can easily control the distance and speed of the touch move.

Also, as shown therein, the key-shaped pad 60 includes a key pad II including numerals, alphabets and a "previous channel" key for selecting a previous channel. The key pad II is configured and shaped like a keypad provided in a mobile phone. If a user performs the switch click on "1" with his/her finger, the position information on the touch sense pad 10 where "1" is marked is transmitted to the main body 200.

To distinguish the area A from the boundary B, the boundary B and the area A of the key-shaped pad 60 may be different materials. In this case, the boundary B may not be recessed, and a user can distinguish the area A and the boundary B through feeling of different materials. Also, the area A and the boundary B may be distinguished by arranging a convex lens or the like structure on the area A.

When the switch is clicked, the position information of the area A that is being currently touched is obtained. The switch 20 is a button for receiving a click of a user, and information about the area A, touched at a moment when the switch click is generated, provides various methods for controlling an external device. For example, the areas A are assigned with different functions for changing a channel up or down, adjusting a volume up or down, etc. Also, many different controls may be performed in accordance with the number of switch clicks assigned to the area A.

According to an alternative exemplary embodiment, not one but a plurality of switches may be provided. The switch may be placed under each area A, or placed under a certain number of areas A. If the touch sense pad 10 is large, the plurality of switches may be provided for more easily receiving the switch click.

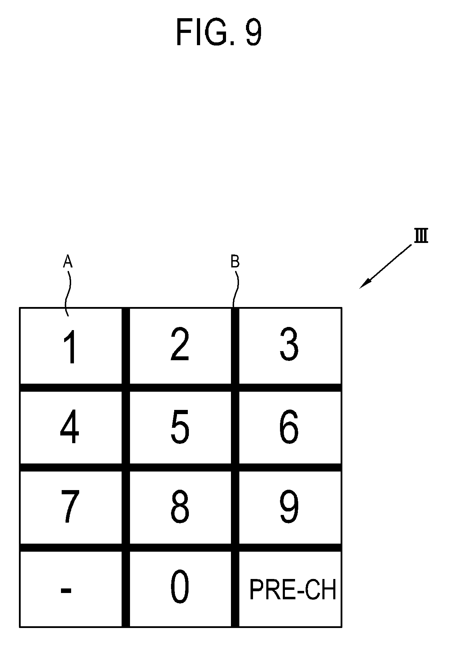

FIG. 9 shows a touch sense pad included in a user input unit according to still another exemplary embodiment. In this exemplary embodiment, a boundary B of an area A is visually printed on the touch sense pad 10. Also, a numeral key pad III is marked on the area A. The boundary B and the numeral key pad III may be marked by screen printing. Further, the user input device may include an optical panel or film capable of representing the boundary B of the area A. For example, the user input device may include a light guide film or an OLED panel to visually represent the boundary B and between areas of the numeral key pad III only when needed.

The touch sense pad 10 may be printed with a QWERTY key pad, a Hangeul key pad, etc. as well as the numeral key pad III. Also, an arrow button, a function button, etc. which are physically provided in related art remote controllers may be marked.

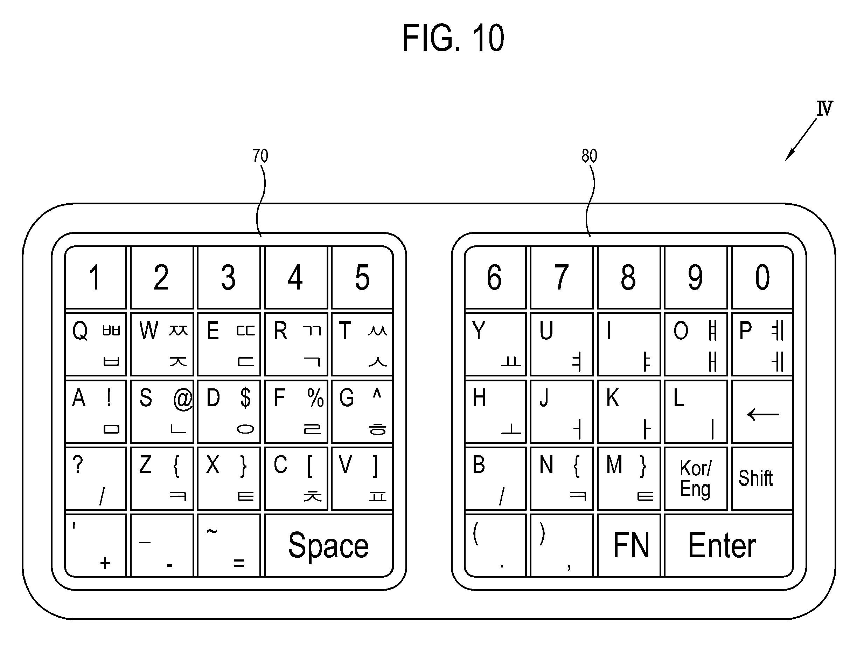

FIG. 10 shows a touch sense pad included in a user input unit according to still another exemplary embodiment. As shown therein, the user input device includes two touch sense pads 70 and 80 spaced apart from each other, in which the touch sense pads 70 and 80 are marked with the QWERTY key pad IV. With a recent spread of an Internet protocol (IP) television, a user can receive various contents from the Internet and a variety of external servers. Accordingly, there are increased occasions where a user has to input letters or symbols rather than a simple selection in order to control and execute the contents. In particular, a demand for inputting letters to the television has been increased as a social network service (SNS) site is vitalized and various applications are developed.

The two touch sense pads 70 and 80 are controllable through left and right hands, respectively. The position information of the area A where a user's click is generated is output to thereby have an effect of inputting letters to the television or the like external device.

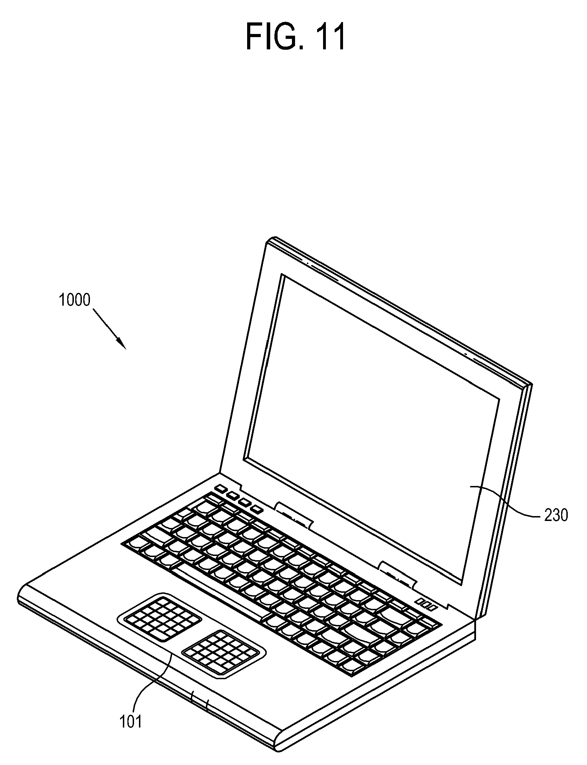

FIG. 11 shows a schematic view of a display apparatus according to still another exemplary embodiment. A display apparatus 1000 in this exemplary embodiment includes a user input unit 101 and a display unit 230 provided in a single body. As shown therein, the display apparatus 1000 may include a notebook computer, an E-book, a Net-book, or the like mobile terminal. Alternatively, the display apparatus may be achieved by a digital camera, a MP3 player, a tablet personal computer (PC), a hand held product (HHP), etc. In this exemplary embodiment, the user input unit 101 is not limited to the remote controller as shown in FIG. 1, but may include any user input device including a touch pad. Here, a method of eliminating an error of a switch click in the user input unit 101 is substantially equal to that of the foregoing exemplary embodiments.

As described above, exemplary embodiments provide a display apparatus which can correctly recognize a click of a switch and a control method thereof.

Also, exemplary embodiments provide a display apparatus which can prevent a switch from being clicked by a user's mistake, and a control method thereof.

Further, exemplary embodiments provide a display apparatus which enables a user to easily input a text through a touch pad, and a control method thereof.

Although exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
a user input unit which comprises at least one touch sense pad and at least one switch; and
a controller which determines that the switch is clicked if a difference between first position information of a first position on the touch sense pad where a switch press is generated and second position information of a second position on the touch sense pad where a switch release is generated is within a preset range.

2. The display apparatus according to claim 1, wherein the controller determines that the touch sense pad is clicked at the first position where the switch press is generated.

3. The display apparatus according to claim 1, wherein if the first coordinate position information is (X, Y), the second coordinate position information is (X', Y'), |X-X'| is equal to or less than a preset first critical value, and |Y-Y'| is equal to or less than a preset second critical value, the controller determines that the touch sense pad is clicked at the first position where the switch press is generated.

4. The display apparatus according to claim 1 or claim 3, wherein if the first position information is (X, Y), the second position information is (X', Y'), and |X-X'| exceeds a preset critical value, the controller determines that the switch is not clicked.

5. The display apparatus according to any one of claims 1, 3 and 4, wherein if the first position information is (X, Y), the second position information is (X', Y'), and |Y-Y'| exceeds a preset critical value, the controller determines that the switch is not clicked.

6. The display apparatus according to claim 1, wherein if the first position information is (X, Y), the second position information is (X', Y'), and (X-X')²+(Y-Y')² exceeds a preset critical value, the controller determines that the switch press is not clicked.

7. The display apparatus according to claim 4, wherein if it is determined that the switch is not clicked, the controller determines that a touch move is input from the first position where the switch press is generated to the second position where the switch release is generated.

8. The display apparatus according to any one of the preceding claims, wherein the switch is disposed under the touch sense pad.

9. The display apparatus according to any one of the preceding claims, wherein the at least one switch comprises one switch.

10. A method of controlling a display apparatus comprising a user input unit which comprises at least one touch sense pad and at least one switch, the method comprising:
sensing a first position on the touch sense pad where a switch press is generated;
sensing a second position on the touch sense pad where a switch release is generated;
determining whether a difference between first position information of the first position and second position information of the second position is within a preset range; and
determining whether the switch is clicked based on whether the difference between the first position and the second position is within the preset range.

11. The method according to claim 10, wherein if the first position information is (X, Y), the second position information is (X', Y'), and
the determining whether a difference between the first position information and the second position information is within a preset range comprises determining whether |X-X'| is equal to or less than a preset first critical value and |Y-Y'| is equal to or less than a preset second critical value, and
determining whether the switch is clicked comprises:
determining that the touch sense pad is clicked at the first position if |X-X'| is equal to or less than the present critical value and |Y-Y'| is equal to or less than a preset second critical value.

12. The method according to claim 10, wherein if the first position information is (X, Y), the second position information is (X', Y'), and
the determining whether a difference between the first position information and the second position information is within a preset range comprises determining whether |X-X'| exceeds a preset critical value, and
determining whether the switch is clicked comprises:
determining the switch is not clicked if |X-X'| exceeds the present critical value.

13. The method according to claim 10, wherein if the first position information is (X, Y), the second position information is (X', Y'), and
the determining whether a difference between the first position information and the second position information is within a preset range comprises determining whether |Y-Y'| exceeds a preset critical value, and
determining whether the switch is clicked comprises:
determining that the switch is not clicked if |Y-Y'| exceeds the preset critical value.

14. The method according to claim 10, wherein if the first position information is (X, Y), the second position information is (X', Y'), and
the determining whether a difference between the first position information and the second position information is within a preset range comprises determining whether (X-X')²+(Y-Y')² exceeds a preset critical value, and
determining whether the switch is clicked comprises:
determining that the switch press is not clicked if (X-X')²+(Y-Y')² exceeds the preset critical value.
